# EUROPEAN PATENT SPECIFICATION

(11) **EP 2 957 686 B1**
(45) Date of publication and mention of the grant of the patent: **25.09.2019**
(21) Application number: 14002076.9
(22) Date of filing: 17.06.2014
(51) Int. Cl.: E04B 1/76, B23B 51/04, B23B 51/08

(54) **Jig for setting an oblong expansion element in a dowel**
Vorrichtung zur Einstellung eines länglichen Spreizelements in einem Dübel
Gabarit de réglage d'un élément de dilatation oblongue dans une douille

(43) Date of publication of application: 23.12.2015
(73) Proprietor: Illinois Tool Works, Inc., Glenview, Illinois 60025 (US)
(72) Inventor: Pasquier, Guillaume, 251 01 Ricany (CZ)
(74) Representative: Trinks, Ole

(56) References cited:
- EP-A2- 2 639 374
- WO-A1-2011/012096
- DE-A1-102004 006 936
- US-A- 3 262 474
- US-A- 4 072 441

## Description

The invention is directed to a jig for setting an oblong expansion element in a dowel for the fixture of an insulation board according to the general part of claim 1.

In order to thermally insulate buildings, it is known from the prior art to arrange thermal insulation boards, for example of expended polystyrene, on their respective facade. Such insulation boards are then fixed to the underlying substrate. In particular, a hole through the insulation boards and the substrate is drilled and a dowel inserted. The dowel regularly comprises a plate-shaped dowel head for exerting a holding force on the insulation board. Next, an oblong expansion element is inserted into the dowel, for example by being screwed in, thereby causing expansion and fixing of the dowel. The anchor is regularly screwed in by means of a mounting jig fixed to a drilling apparatus.

Generally, this expansion of the dowel also involves a shortening of the dowel, which in turn causes the plate-shaped dowel head to be pulled into the insulation board and thereby to be countersunk. An insulation cap is then placed on top of the dowel head. However, the expended polystyrene of an insulation board generally provides substantial resistance to the countersinking of the plate-shaped dowel head.

It is known from the prior art and in particular from WO 2011/012096 A1, from which the present invention proceeds, to provide a mounting jig for attachment to a drilling apparatus and for screwing the anchor into the dowel. In order to facilitate countersinking the plate-shaped dowel head, the mounting jig comprises a cutting arrangement arranged at the circumference of the dowel head. Thereby a cut is formed in the insulation board corresponding to the shape of the dowel head, which makes compression of the insulation board - and thereby also countersinking of the dowel head - significantly easier. However, since the mounting jig is repeatedly used for a large number of anchors per facade side of each building, the cutting arrangement is prone to abrasion, thereby necessitating replacement of the entire mounting jig.

From US 4 072 441 A, a hole saw is known having a cutting arrangement comprising a metal tube having teeth formed on one end and a cap on the other end. For locking them together in driving relationship, apertures are formed in the tube and resilient detent fingers are formed on the cap to snap into the apertures.

It is also known to provide a separate cutting arrangement below the dowel head. However, since such a cutting arrangement remains below the dowel head even after it is countersunk, without contributing to the effect of the dowel head or of the insulation board thereafter, due to the large number of dowel heads required this approach results in significant material waste.

It is therefore the object of the invention to provide a solution for facilitating the countersinking of the dowel head of a dowel configured to receive an oblong expansion element for the fixture of an insulation board and to avoid excessive waste.

The above object is solved for a jig for setting an oblong expansion element in a dowel for the fixture of an insulation board according to the general part of claim 1 with the features of the characterizing part of claim 1.

According to the invention, the jig is provided with a cutting arrangement which is form-fit by snap-fit to the flange. Thus, when the cutting arrangement is found to be abraded such that its effectiveness is impaired or need to be replaced for some other reason, it can be removed from the flange. Then, a new cutting arrangement can be coupled to the flange with a form-fit. Such a form-fit facilitates re-attaching a new cutting arrangement to the jig. The cutting arrangement is snap-fitted to the flange. This particular kind of form-fit ensures a secure mechanical fixing that can be established by a sliding movement.

It has also been found that the jig according to the proposal does not need a depth stop. Instead, by having the flange and the cuffing arrangement dimensioned and positioned according to the preferred embodiments of dependent claims 2 to 4, a person using the jig can determine the correct depth for countersinking the dowel head without the need for a depth stop.

Further features of the present invention are disclosed in the subclaims.

In the following the invention will be described in examples referring to the drawings. In the drawings show
Fig. 1 a perspective view of a jig according to a first embodiment of the proposal,
Fig. 2 the jig according to Fig. 1 in a longitudinal section view,
Fig. 3 a jig according to a second embodiment of the proposal in a longitudinal section view and
Fig. 4 the jig of Fig. 2a) during installation and b) in the installed state.

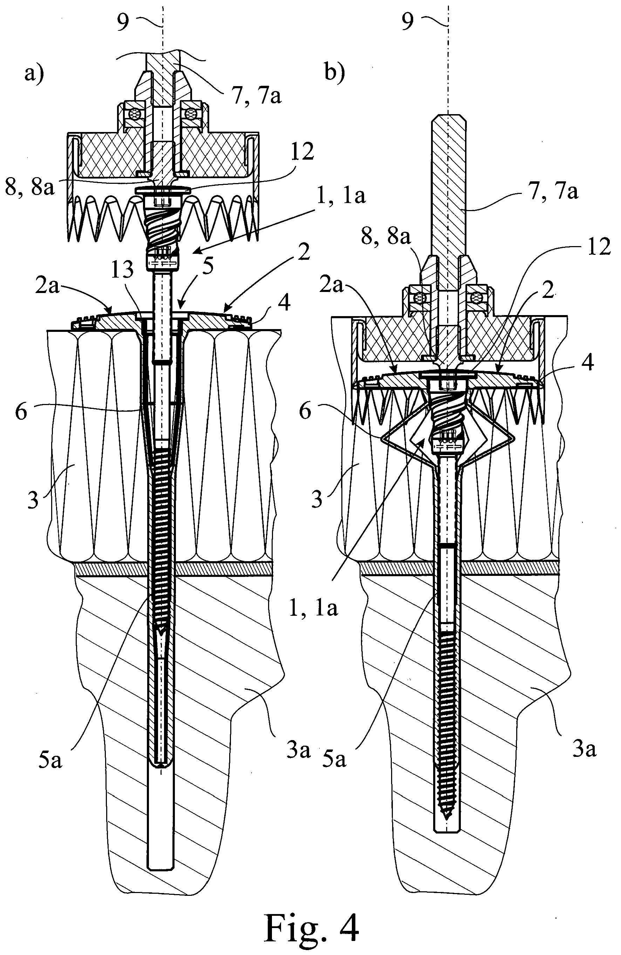

The proposed jig is for setting an oblong expansion element 1 in a dowel 2 for the fixture of an insulation board 3. This process is shown in detail in Fig. 4a and 4b. Firstly, a hole is drilled through the insulation board 3 and the underlying substrate 3a. Secondly, the dowel 2 is manually inserted into the hole. The dowel 2 comprises a plate-shaped dowel head 2a with a pressure plate 4 and a center hole 5 for the insertion of the oblong expansion element 1, which is here and preferably a screw-in anchor la. The oblong expansion element 1 may be provided partially pre-inserted into the center hole 5 - as shown in Fig. 4a - or be partially pre-inserted into the center hole 5 by manual action after the dowel 2 is inserted into the hole.

The jig is configured for applying a rotating driving action to the oblong expansion element 1, e. g. the screw-in anchor 1a. This driving action causes the screw-in anchor 1a to be fully inserted into the center hole 5, which comprises a screw thread 5a corresponding to the screw-in anchor la. The dowel 2 comprises an expanding section 6, which consequently expands laterally to create a force fit between the expanding section 6 and the substrate 3a around the expanding section 6. A comparison between Fig. 4a and Fig. 4b illustrates this expanding effect.

Coming back to the proposed jig, it further comprises a coupling structure 7, which is preferably and as shown in the drawing a stem 7a, for coupling to a power drill. The proposed jig further comprises an engagement structure 8, which is preferably and as shown in the drawing a tang 8a, for engaging the oblong expansion element 1 and for rotating with the coupling structure 7 around a central axis 9 of the jig. In other words, the engagement structure 8 is fixedly coupled to the coupling structure 7 with regard to a rotating movement around the central axis 9 of the jig. Thereby, the driving action is transmitted from the power drill to the oblong expansion element 1. In the embodiments shown in the drawing, this fixed coupling is provided by a central sleeve 8b in which both the coupling structure 7 and the engagement structure 8 are screwed in.

The jig according to the proposal further comprises a flange 10 extending substantially radially with respect to the central axis 9 and a cutting arrangement 11 for cutting into the insulation board 3. In particular, the cutting arrangement 11 comprises cutting teeth 11a for cutting into the insulation board 3. Preferably, the cutting teeth 11a are substantially aligned in the direction of the central axis 9, particularly with respect to a radial direction of the central axis 9. According to the embodiments shown in the drawing, the cutting teeth 11a may be symmetrical with respect to a tangential direction of the central axis 9. Alternatively, the cutting teeth 11a may be slanted or otherwise formed asymmetrical with respect to either tangential direction of the central axis 9. In this way, the cutting effect of the cutting arrangement 11 may be improved when the cutting arrangement 11 rotates in a corresponding rotation direction. This variant of a rotating cutting arrangement 11 is described with more details below.

The cutting arrangement 11 is coupled to the flange 10. Preferably, the cutting arrangement is arranged circumferentially with respect to the central axis 9. In other words, the cutting arrangement 11 is arranged substantially in a circular shape around the central axis 9 when seen as a cross-view with respect to the central axis 9.

The jig according to the proposal is characterized in that the cutting arrangement 11 is form-fit the flange 10. Thereby, a new cutting arrangement 11 may be reattached to the flange 10 after the previous cutting arrangement 11 has worn out. The other parts of the jig are generally much less subject to wear and abrasion.

It is preferred that the cutting arrangement 11 is detachable from the flange 10. In particular, it may be that the cutting arrangement 11 is non-destructively detachable from the flange 10. This means that there is a process of detaching the cutting arrangement 11 from the flange 10 which leaves both the cutting arrangement 11 and the flange 10 intact.

Returning now to the operation of the jig in connection with the dowel 2 for the fixture of the insulation board 3, the above driving action causes a downward movement of the oblong expansion element 1. The oblong expansion element 1 further comprises a head 12 that projects radially from the rest of the expansion element 1 with respect to the central axis 9, which is identical to the dowel axis. During installation, in particular during driving the oblong expansion element 1 into the direction of the expanding section 6, the head 12 comes into engagement with the edge 13 of the center hole 5, thereby pulling the dowel head 2a into the direction of the expanding section 6, which corresponds to the countersink direction.

As can be seen from the embodiment of Fig. 4b, even before the dowel head 2a is pulled in the countersink direction by this operation, the cutting arrangement 11 and in particular the cutting teeth 11a have already cut into the insulation board 3. The resulting substantially circular cut line around the pressure plate 4 - preferably arranged at the circumference of the pressure plate 4 - weakens the insulation board 3 such that the insulating material within the cut line, i.e. below the pressure plate 4, is more easily compressed. In fact, the cutting arrangement 11 results in a clean wall of insulating material around the pressure plate 4. Since the cutting arrangement 11 has already cut at a greater depth in the countersink direction than the current position of the pressure plate 4 and since the cutting arrangement 11 moves together with the oblong expansion element 1 in the countersink direction, the above cutting and weakening effect is always sufficiently "ahead" of the dowel head 2a and the pressure plate 4 for any appropriate depth to which the dowel head 2a is to be countersunk.

After the above countersinking has been completed, the jig can be fully withdrawn from the resulting gap in the insulation board 3, which is then preferably filled with an insulation cap - not shown here - of an appropriate diameter and height.

According to a preferred embodiment, the flange 10 extends radially to a maximum radius 14 of the jig with respect to the central axis 9. In other words, the extent of the flange 10 in the radial direction with respect to the central axis 9 defines or co-defines the maximum radius 14 of the jig.

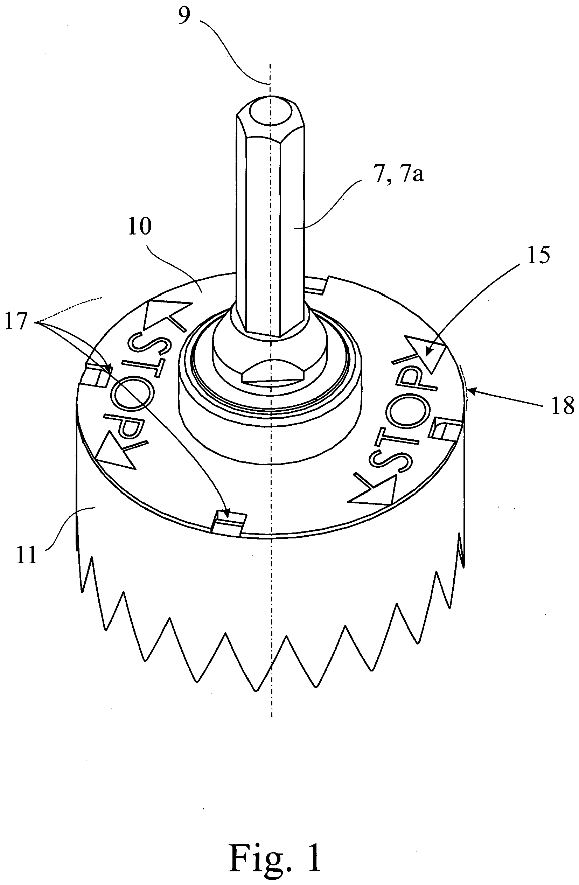

Further, it is preferred that the cutting arrangement 11 extends radially to a maximum radius 14 of the jig with respect to the central axis 9. In this case, the flange 10 - or any other part of the jig - does not act as a depth stop for the jig. It has been found that there is no need for such a depth stop. Preferably, markings 15 - which are shown in Fig. 1 - may be provided on a side of the flange 10 facing away from the insulation board 3 for aligning the depth to which the oblong expansion element 1 is set in the dowel 2.

Equally, it is preferred that the extent of the flange 10 in the radial direction with respect to the central axis 9 is substantially equal to the extent of the cutting arrangement 11 in the radial direction with respect to the central axis 9.

It is further preferred that the cutting arrangement 11 is coupled to the flange 10 substantially at an outer perimeter of the flange 10. This permits an easy coupling and potentially also a detaching of the cutting arrangement 11 and the flange 10, as will be described in more detail below.

A snap-fit mechanism is used for coupling the cutting arrangement 11 to the flange 10 with a form-fit and, likewise, for detaching the cutting arrangement 11 from the flange 10. With regard to this coupling, it is preferred that the cutting arrangement 11 is fixedly coupled to the flange 10 with respect to a rotation of the flange 10. Thus, any such rotation of the flange 10 translates to a rotation of the cutting arrangement 11, and vice versa. In particular, such a rotation means a rotation around the central axis 9.

According to the invention, the cutting arrangement 11 is snap-fit to the flange 10. Such a snap-fit is, on the one hand easy, to establish. On the other hand, it is secure against inadvertent detaching. It may also be configured so as to be convenient for deliberate detaching. A snap-fit is also suitable for withstanding considerable force without detaching the cutting arrangement 11 from the flange 10.

The way of effecting the above snap-fit involves substantially only a relative sliding movement. Here, the cutting arrangement 11 is configured for being snap-fit to the flange 10 by sliding the cutting arrangement 11 in the direction of the central axis 9 and aligning it with the flange 10. In particular, the cutting arrangement 11 can be slid over the perimeter surface of the flange 10 along the central axis 9 coming from the side of the insulation board 3 until it is flush with the flange 10, at which point the snap-fit is established.

With regard to the snap-fit mechanism itself, the cutting arrangement 11 comprises snap-in hooks 16 for engaging corresponding counteropenings 17 of the flange 10 for the snap-fit. It is preferred to have the flange 10 made of metal. Equally, it is preferred to have the cutting arrangement 11 made of plastic. Accordingly, it is advantageous to have the flexible part of the snap-fit on the side of the cutting arrangement 11. Preferably, there are more than two snap-in hooks 16 and in particular four snap-in hooks 16 as shown in the embodiment shown of Fig. 1 to 4. The number of counteropenings 17 is then identical to that of the snap-in hooks 16.

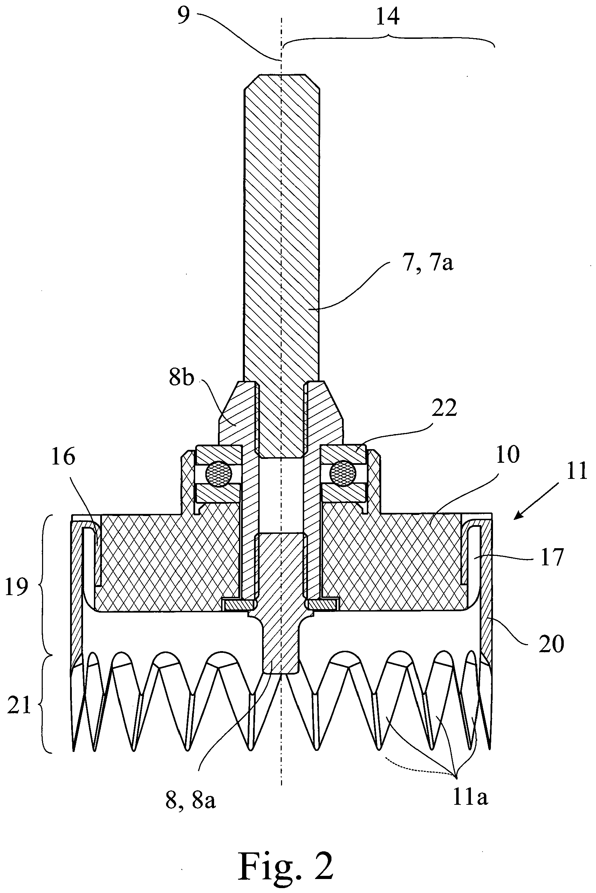

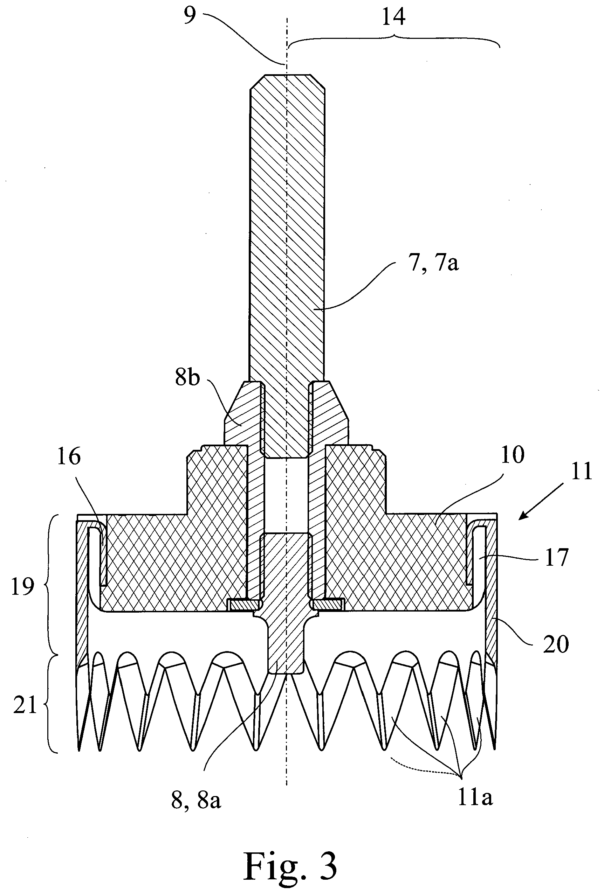

As seen in particular in Fig. 2 and 3, the snap-in hooks 16 bend radially with respect to the axial direction 9 for engaging the counteropenings 17. In particular, the snap-in hooks 16 face radially in the inward direction with respect to the axial direction 9. It is preferred that the snap-in hooks 16 are spaced substantially equidistantly around a perimeter 18 of the cutting arrangement 11. Thereby, there are multiple possible orientations of the cutting arrangement 11 for coupling the cutting arrangement 11 to the flange 10 with the snap-fit.

As already referred to above, it is preferred that the cutting arrangement 11 is flush with the flange 10 with respect to the central axis 9 in the direction facing away from the insulation board 3. This facilitates determining the depth to which the dowel head 2 is countersunk. Alternatively or in addition, it is preferred that the cutting arrangement 11 extends beyond the flange 10 with respect to the central axis 9 in the direction facing toward the insulation board 3.

In order to ensure that - as already described above - the cutting effect of the cutting arrangement 11 has already progressed sufficiently to facilitate the further compression of the insulation board 3, it is preferred that the cutting arrangement 11 extends beyond the engagement structure 8 with respect to the central axis 9 in the direction facing toward the insulation board 3.

Referring now to specific features of the cutting arrangement 11 itself, it is preferred that the cutting arrangement 11 comprises a wall section 19, which extends in the direction of the central axis 9 and which provides a perimeter wall 20 of the cutting arrangement 11. Alternatively or in addition, it is preferred that the cutting arrangement 11 comprises a toothed section 21 providing the cutting teeth 11a. These were already mentioned above. The cutting teeth 11a have a particularly advantageous placement along the central axis 9, if, with respect to the central axis 9, the toothed section 21 begins substantially at the end of the engagement structure 8 facing toward the insulation board 3. This can be seen in particular from Fig. 2 and 3.

It was already stated above that according to one preferred embodiment, which here corresponds to the first embodiment of Fig. 1, 2 and 4, the cutting arrangement 11 does not rotate with the oblong expansion element 1 and therefore also not with the coupling structure 7 or the engagement structure 8. Thereby, the cutting action of the cutting arrangement 11 is only based on a pressing force exerted on the jig. In order to decouple the cutting arrangement 11 from this rotation, it is preferred that the flange 10 is arranged rotatably around the coupling structure 7. In particular, it is preferred that the jig comprises a rolling bearing 22 between the coupling structure 7 and the flange 10. Here, there is a clearance such that engagement structure 8 and the central sleeve 8b may rotate around the central axis 9 without engaging the flange 10.

According to a further preferred embodiment, which here corresponds to the second embodiment of Fig. 3, the cutting arrangement 11 also rotates together with the oblong expansion element 1. Thus, this rotation also contributes to the cutting effect. According to this preferred embodiment, the flange 10 is rigidly coupled to the coupling structure 7 with respect to a rotation of the coupling structure 7 around the central axis 9. Equally, it is preferred, that the flange 10 is fixedly coupled to the engagement structure 8.

## Claims

1. Jig for setting an oblong expansion element (1) in a dowel (2) for the fixture of an insulation board (3),with a coupling structure (7) for coupling to a power drill, an engagement structure (8) for engaging the oblong expansion element (1) and for rotating with the coupling structure (7) around a central axis (9) of the jig, a flange (10) extending substantially radially with respect to the central axis (9) and a cutting arrangement (11) for cutting into the insulation board (3), which cutting arrangement (11) is coupled to the flange (10),
**characterized in that**,
the cutting arrangement (11) is form-fit to the flange (10) by a snap-fit, **in that** the cutting arrangement (11) comprises snap-in hooks (16) facing radially in the inward direction with respect to the axial direction (9), preferably more than two snap-in hooks (16), in particular four snap-in hooks (16), for engaging corresponding counteropenings (17) of the flange (10) for the snap-fit,
wherein the cutting arrangement (11) is configured for being snap-fit to the flange (10) by sliding the cutting arrangement (11) in the direction of the central axis (9) and aligning it with the flange (10), and wherein the snap-in hooks (16) are radially bendable to engage with the counteropenings (17).

2. Jig according to claim 1,
**characterized in that** the flange (10) extends radially to a maximum radius (14) of the jig with respect to the central axis (9).

3. Jig according to claim 1 or 2,
**characterized in that** the cutting arrangement (11) extends radially to a maximum radius (14) of the jig with respect to the central axis (9).

4. Jig according to one of claims 1 to 3,
**characterized in that** the cutting arrangement (11) is coupled to the flange (10) substantially at an outer perimeter of the flange (10).

5. Jig according to one of claims 1 to 4,
**characterized in that** the cutting arrangement (11) is fixedly coupled to the flange (10) with respect to a rotation of the flange (10).

6. Jig according to one of claims 1 to 5,
**characterized in that** the snap-in hooks (16) are spaced substantially equidistantly around a perimeter (18) of the cutting arrangement (11).

7. Jig according to one of claims 1 to 6,
**characterized in that** the cutting arrangement (11) is flush with the flange (10) with respect to the central axis (9) in the direction facing away from the insulation board (3) and/or that the cutting arrangement (11) extends beyond the flange (10) with respect to the central axis (9) in the direction facing toward the insulation board (3).

8. Jig according to one of claims 1 to 7,
**characterized in that** the cutting arrangement (11) extends beyond the engagement structure (8) with respect to the central axis (9) in the direction facing toward the insulation board (3).

9. Jig according to one of claims 1 to 8,
**characterized in that**, the cutting arrangement (11) comprises a wall section (19), which extends in the direction of the central axis (9), providing a perimeter wall (20) of the cutting arrangement (11) and/or a toothed section (21) providing cutting teeth (11a), preferably, wherein, with respect to the central axis, the toothed section begins substantially at the end of the engagement structure (8) facing toward the insulation board (3).

10. Jig according to one of claims 1 to 9,
wherein the flange (10) is arranged rotatably around the coupling structure (7), preferably, wherein the jig comprises a rolling bearing (22) between the coupling structure (7) and the flange (10).

11. Jig according to one of claims 1 to 9,
wherein the flange (10) is rigidly coupled to the coupling structure (7) with respect to a rotation of the coupling structure (7) around the central axis (9), preferably, wherein the flange (10) is fixedly coupled to the engagement structure (8).

## Patentansprüche

1. Vorrichtung zum Einstellen eines länglichen Spreizelements (1) in einem Dübel (2) zur Befestigung einer Dämmplatte (3) mit einer Kopplungsstruktur (7) zur Kopplung an eine Bohrmaschine, mit einer Eingriffsstruktur (8) zum Eingriff in das längliche Spreizelement (1) und zum Drehen mit der Kopplungsstruktur (7) um eine Mittelachse (9) der Vorrichtung, mit einem Flansch (10), der sich in Bezug zur Mittelachse (9) im Wesentlichen radial erstreckt, und mit einer Schneidanordnung (11), um in die Dämmplatte (3) zu schneiden, wobei die Schneidanordnung (11) mit dem Flansch (10) gekoppelt ist,
**dadurch gekennzeichnet, dass**
die Schneidanordnung (11) formschlüssig auf dem Flansch (10) eingerastet ist, dass die Schneidanordnung (11) Rasthaken (16) umfasst, die in Bezug zur Axialrichtung (9) radial nach innen gewandt sind, vorzugsweise mehr als zwei Rasthaken (16), insbesondere vier Rasthaken (16), um in die entsprechenden Öffnungen (17) des Flanschs (10) einzurasten,
wobei die Schneidanordnung (11) dazu ausgelegt ist, auf dem Flansch (10) einzurasten, indem die Schneidanordnung (11) in Richtung der Hauptachse (9) geschoben und mit dem Flansch (10) ausgerichtet wird, und wobei die Rasthaken (16) radial biegsam sind, um in die Öffnungen (17) eingreifen zu können.

2. Vorrichtung nach Anspruch 1,
**dadurch gekennzeichnet, dass** sich der Flansch (10) in Bezug zur Hauptachse (9) radial zu einem maximalen Radius (14) der Vorrichtung erstreckt.

3. Vorrichtung nach Anspruch 1 oder 2,
**dadurch gekennzeichnet, dass** sich die Schneidanordnung (11) in Bezug zur Hauptachse (9) radial zu einem maximalen Radius (14) der Vorrichtung erstreckt.

4. Vorrichtung nach einem der Ansprüche 1 bis 3,
**dadurch gekennzeichnet, dass** die Schneidanordnung (11) im Wesentlichen an einem Außenumfang des Flanschs (10) mit dem Flansch (10) gekoppelt ist.

5. Vorrichtung nach einem der Ansprüche 1 bis 4,
**dadurch gekennzeichnet, dass** die Schneidanordnung (11) in Bezug zu einer Drehung des Flanschs (10) fest mit dem Flansch (10) gekoppelt ist.

6. Vorrichtung nach einem der Ansprüche 1 bis 5,
**dadurch gekennzeichnet, dass** die Rasthaken (16) im Wesentlichen gleichmäßig um einen Umfang (18) der Schneidanordnung (11) beabstandet sind.

7. Vorrichtung nach einem der Ansprüche 1 bis 6,
**dadurch gekennzeichnet, dass** die Schneidanordnung (11) in Bezug zur Mittelachse (9) in der Richtung, die von der Dämmplatte (3) abgewandt ist, mit dem Flansch (10) bündig ist und/oder dass sich die Schneidanordnung (11) in Bezug zur Mittelachse (9) in der Richtung, die der Dämmplatte (3) zugewandt ist, über den Flansch (10) hinaus erstreckt.

8. Vorrichtung nach einem der Ansprüche 1 bis 7,
**dadurch gekennzeichnet, dass** sich die Schneidanordnung (11) in Bezug zur Mittelachse (9) in der Richtung, die der Dämmplatte (3) zugewandt ist, über die Eingriffsstruktur (8) hinaus erstreckt.

9. Vorrichtung nach einem der Ansprüche 1 bis 8,
**dadurch gekennzeichnet, dass** die Schneidanordnung (11) einen Wandabschnitt (19) umfasst, der sich in der Richtung der Mittelachse (9) erstreckt und eine Umfangswand (20) der Schneidanordnung (11) bereitstellt, und/oder einen gezahnten Abschnitt (21) umfasst, der Schneidzähne (11a) bereitstellt, vorzugsweise wobei in Bezug zur Mittelachse der gezahnte Abschnitt im Wesentlichen am Ende der Eingriffsstruktur (8), der Dämmplatte (3) zugewandt, beginnt.

10. Vorrichtung nach einem der Ansprüche 1 bis 9,
wobei der Flansch (10) drehbar um die Kopplungsstruktur (7) angeordnet ist, vorzugsweise wobei die Vorrichtung ein Wälzlager (22) zwischen der Kopplungsstruktur (7) und dem Flansch (10) umfasst.

11. Vorrichtung nach einem der Ansprüche 1 bis 9,
wobei der Flansch (10) in Bezug zur Drehung der Kopplungsstruktur (7) um die Mittelachse (9) starr mit der Kopplungsstruktur (7) gekoppelt ist, vorzugsweise wobei der Flansch (10) mit der Eingriffsstruktur (8) fest gekoppelt ist.

## Revendications

1. Gabarit de réglage d'un élément de dilatation oblongue (1) dans une douille (2) pour la fixation d'un panneau isolant (3), avec une structure de couplage (7) pour le couplage à une perceuse, une structure d'engagement (8) pour engager l'élément de dilatation oblongue (1) et pour tourner avec la structure de couplage (7) autour d'un axe central (9) du gabarit, une bride (10) s'étendant sensiblement radialement par rapport à l'axe central (9) et un dispositif de coupe (11) pour couper dans le panneau isolant (3), ledit dispositif de coupe (11) étant couplé à la bride (10),
**caractérisé en ce que**,
le dispositif de coupe (11) est ajusté à la bride (10) par encliquetage, **en ce que** le dispositif de coupe (11) comprend des crochets encliquetables (16) orientés radialement vers l'intérieur par rapport à la direction axiale (9), de préférence plus de deux crochets encliquetables (16), en particulier quatre crochets encliquetables (16), pour engager les contre-ouvertures correspondantes (17) de la bride (10) pour l'encliquetage,
le dispositif de coupe (11) étant configuré pour être encliqueté sur la bride (10) en faisant glisser le dispositif de coupe (11) dans la direction de l'axe central (9) et en l'alignant avec la bride (10), et les crochets encliquetables (16) étant radialement pliables pour s'engager avec les contre-ouvertures (17).

2. Gabarit selon la revendication 1, **caractérisé en ce que** la bride (10) s'étend radialement jusqu'à un rayon maximal (14) du gabarit par rapport à l'axe central (9).

3. Gabarit selon la revendication 1 ou 2, **caractérisé en ce que** le dispositif de coupe (11) s'étend radialement jusqu'à un rayon maximal (14) du gabarit par rapport à l'axe central (9).

4. Gabarit selon l'une des revendications 1 à 3,
**caractérisé en ce que** le dispositif de coupe (11) est couplé à la bride (10) sensiblement sur un périmètre extérieur de la bride (10).

5. Gabarit selon l'une des revendications 1 à 4,
**caractérisé en ce que** le dispositif de coupe (11) est couplé de manière fixe à la bride (10) par rapport à une rotation de la bride (10).

6. Gabarit selon l'une des revendications 1 à 5,
**caractérisé en ce que** les crochets encliquetables (16) sont espacés de manière sensiblement équidistante sur un périmètre (18) du dispositif de coupe (11).

7. Gabarit selon l'une des revendications 1 à 6,
**caractérisé en ce que** le dispositif de coupe (11) est aligné avec la bride (10) par rapport à l'axe central (9) dans la direction opposée à la plaque isolante (3) et/ou **en ce que** le dispositif de coupe (11) dépasse la bride (10) par rapport à l'axe central (9) dans la direction opposée au panneau isolant (3).

8. Gabarit selon l'une des revendications 1 à 7,
**caractérisé en ce que** le dispositif de coupe (11) s'étend au-delà de la structure d'engagement (8) par rapport à l'axe central (9) dans la direction orientée vers le panneau isolant (3) .

9. Gabarit selon l'une des revendications 1 à 8,
**caractérisé en ce que** le dispositif de coupe (11) comprend une section de paroi (19) qui s'étend dans la direction de l'axe central (9) et présentant une paroi périphérique (20) du dispositif de coupe (11) et/ou une section dentée (21) présentant des dents de coupe (l1a), de préférence, la section dentée commençant sensiblement, par rapport à l'axe central, à l'extrémité de la structure d'engagement (8) tournée vers le panneau isolant (3).

10. Gabarit selon l'une des revendications 1 à 9, dans lequel la bride (10) est disposée en rotation autour de la structure de couplage (7), de préférence, le gabarit comprenant un palier à rouleaux (22) entre la structure de couplage (7) et la bride (10).

11. Gabarit selon l'une des revendications 1 à 9, dans lequel la bride (10) est couplée rigidement à la structure de couplage (7) par rapport à une rotation de la structure de couplage (7) autour de l'axe central (9), de préférence, la bride (10) étant couplée de manière fixe à la structure d'engagement (8).
